# FASCICULE DE BREVET EUROPEEN

(11) **EP 1 559 498 B1**
(45) Date de publication et mention de la délivrance du brevet: **07.03.2007**
(21) Numéro de dépôt: 04300812.7
(22) Date de dépôt: 25.11.2004
(51) Int. Cl.: B23K 35/30

(54) **Procédé de soudage hybride arc-laser des aciers ferritiques**
Verfahren zum hybriden Lichtbogen-Laserschweissen ferritischer Stähle
process of hybrid arc-laser welding of ferritic steels

(30) Priorité: 21.01.2004 FR 0450108
(43) Date de publication de la demande: 03.08.2005
(73) Titulaire: AIR LIQUIDE WELDING FRANCE, 75007 Paris (FR); L'Air Liquide Société Anonyme à Directoire et Conseil de Surveillance pour l'Etude et l'Exploitation des Procédés Georges Claude, 75321 Paris Cedex 07 (FR)
(72) Inventeur: BONNET, Christian, 95650, Puiseux-Pontoise (FR)
(74) Mandataire: Pittis, Olivier

(56) Documents cités:
- DE-C- 4 006 167
- US-A- 4 689 467
- US-A- 5 744 782
- US-A- 6 124 569

## Description

La présente invention concerne un procédé de soudage hybride laser-arc des aciers ferritiques utilisant un fil d'apport et une soudure obtenue avec un tel procédé hybride, c'est-à-dire un procédé de soudage mettant en oeuvre simultanément un arc électrique et un faisceau laser se combinant l'un à l'autre.

Les soudures réalisées par soudage hybride laser-arc sur des aciers ferritiques, tels que les aciers C-Mn définis par la norme EN 10025, les aciers micro-alliés définis par la norme EN 10113 ou encore les aciers dits "trempés- revenus" selon la norme EN 10137, présentent le plus souvent de faibles caractéristiques de résilience ou plus généralement de ténacité à basse température dans le métal fondu, ainsi que des valeurs de dureté dans cette même zone très supérieure à celle des métaux de base

Ces caractéristiques métallurgiques médiocres limitent très fortement l'extension de du soudage hybride laser-arc dans certains domaines de l'industrie, en particulier dans les domaines de la construction navale, de la fabrication et la pose de tubes pour le transport des produits pétroliers, de l'offshore...

Ce problème résulte du fait que ces aciers ont été équilibrés chimiquement pour leur conférer les propriétés mécaniques visées compte tenu de leur procédé d'élaboration, c'est-à-dire des conditions de laminage et de refroidissement subséquent ou encore du traitement thermique qu'ils subissent lors de leur fabrication, par exemple sous forme de tôles ou de tubes.

En effet, les propriétés mécaniques d'un acier résultent, pour une part, de sa composition chimique et, pour une autre part plus importante, de sa microstructure.

La microstructure d'un acier et de la même manière d'une soudure, c'est-à-dire du métal fondu constitué par du métal déposé et du métal de base fondu lors de l'exécution de la soudure, se développe durant le refroidissement depuis l'état austénitique à haute température jusqu'à la température ambiante.

De là, pour une analyse chimique donnée, cette microstructure et par conséquent les propriétés mécaniques de l'acier (ou de la soudure) sont fonction des conditions de refroidissement.

Si l'on considère par exemple un acier contenant environ 0,12% en poids de carbone, avec une faible vitesse de refroidissement, sa structure est composée essentiellement de ferrite, c'est-à-dire d'atomes de fer empilés selon une structure cristallographique cubique centrée, et d'un faible pourcentage, typiquement de l'ordre de 13%, de perlite, c'est-à-dire de lamelles alternées de ferrite et de cémentite qui est le carbure de fer Fe₃C à 6,66% de carbone. Sa dureté Vickers est alors d'environ 130 et sa résistance à la rupture de l'ordre de 400 à 500 MPa.

En revanche, ce même acier aura une structure martensitique, c'est-à-dire une solution solide sursaturée de carbone dans le fer cubique centré, et une dureté Vickers de l'ordre de 400, tandis que sa charge à la rupture sera de 1300 à 1400 MPa s'il subit un refroidissement extrêmement rapide depuis l'état austénitique (haute température).

Pour des vitesses de refroidissement comprises entre ces deux extrêmes, on verra se développer des structures mixtes composées de martensite, de bainite inférieure, de bainite supérieure, et de ferrite + perlite, auxquelles correspondront des propriétés mécaniques intermédiaires.

Les diagrammes de transformation en refroidissement continu, couramment appelés "diagrammes TRC", qui sont bien connu des métallurgistes, indiquent les diverses microstructures qui se développent ainsi que les duretés qui leur correspondent selon la vitesse de refroidissement pour un acier donné et les conditions standard d'austénitisation pour cet acier, à savoir la température (généralement 50°C au dessus du point de transformation complète en austénite) et la durée d'austénitisation (généralement 30 minutes).

De tels diagrammes montrent par ailleurs que pour un acier donné, l'écart de propriétés mécaniques entre la structure martensitique et la structure ferrite + perlite est d'autant plus important que sa teneur en carbone est élevée. Ils montrent aussi, si l'on compare les diagrammes d'aciers de diverses compositions, que les vitesses de refroidissement qui engendrent les différentes microstructures citées précédemment sont fonction de l'ensemble des éléments d'alliage de l'acier.

En effet, tous les éléments d'alliage ont une influence sur la trempabilité, c'est-à-dire l'aptitude d'un acier à acquérir une structure totalement martensitique, donc aussi sur la vitesse critique de trempe qui est la vitesse de refroidissement minimale depuis l'état austénitique permettant d'obtenir une structure 100% martensitique.

La teneur en carbone, en plus de jouer sur la trempabilité, conditionne aussi les propriétés mécaniques des diverses structures

Les procédés de soudage hybride laser-arc, de par la forte densité de puissance qui leur est associée et les vitesses de soudage élevées qu'ils permettent d'atteindre, lesquelles sont souvent plus élevées qu'en soudage laser seul, conduisent à des vitesses de refroidissement très rapides.

Il s'ensuit alors qu'avec les aciers dits ferritiques, la microstructure de la soudure est très différente de celle du métal de base, ce qui conduit dans cette zone à des caractéristiques de dureté et de traction beaucoup plus élevées que celles des aciers assemblés mais aussi à une ductilité et une ténacité du joint soudé trop faibles pour beaucoup d'applications.

Ce phénomène peut être atténué par l'ajout d'un métal d'apport sous forme de fil "froid", c'est-à-dire un fil de soudage dévidé au niveau du plan de joint des tôles, immédiatement en amont de l'impact du faisceau laser et de l'arc mis en oeuvre lors du soudage hybride laser - TIG ou plasma, ou sous forme de fil électrode consommable lorsque le procédé est un hybride Laser/MIG ou MAG.

En effet, en procédant de la sorte, on cherche à ajuster la trempabilité du métal fondu le plus souvent en diminuant sa teneur en éléments d'alliage par rapport au(x) métal(aux) de base mais aussi, dans le cas des aciers très doux, c'est-à-dire ayant une limite d'élasticité inférieure à 240 ou 280 MPa, en l'augmentant.

Dans les deux cas, on cherche à ajuster la trempabilité du métal fondu pour que, sous l'effet du cycle thermique engendré par le soudage hybride, il développe une microstructure moins fragile.

Cependant, procéder ainsi est souvent insuffisant car, avec les procédés de soudage laser hybride, la proportion de métal d'apport dans le métal fondu est le plus souvent de l'ordre de 20 % en poids et dépasse très rarement 40 % en poids, ce qui, même en utilisant les fils les moins chargés en éléments d'alliage disponibles commercialement, c'est-à-dire des fils à 0,5% en poids de manganèse par exemple, ne permet pas d'abaisser suffisamment la trempabilité du métal fondu pour éviter la formation de structures dures et fragiles dans le cas des aciers qui, sans cette addition, conduisent déjà à une structure dure et fragile.

Par ailleurs, dans le cas des aciers très doux pour lesquels on peut être amené à vouloir augmenter la trempabilité pour éviter la formation d'une structure grossière et fragile, l'apport d'un fil plus chargé en éléments d'alliage que le métal à souder, afin d'obtenir dans le métal fondu une structure plus fine, n'apparaît pas la non plus comme une solution satisfaisante car cet affinement de la structure s'accompagne d'une forte augmentation de la dureté et ne conduit de ce fait qu'à une faible diminution de la fragilité.

Le document DE-A-4 006 167 considéré comme meilleur état de la technique antérieure enseigne un procédé de soudage laser d'acier permettant de souder les deux bords longitudinaux d'une feuille métallique de manière à obtenir un tube soudé et divulgue en combinaison les caractéristiques de la revendication 1.

En outre, le document US-A-5,744,782 propose un procédé de soudage à l'arc avec fil fusible d'aciers de haute résistance, lequel fil électrode contient du fer, du carbone, du manganèse, du nickel, du molybdène, du silicium, du cuivre et du bore.

Le problème qui se pose alors est d'améliorer les procédés de soudage hybride laser-arc de manière à pouvoir obtenir des soudures dont la microstructure est quasiment exempte de micro-constituants durs et fragiles, c'est-à-dire présentant des propriétés améliorées en termes de résilience et plus généralement de ténacité ainsi que des caractéristiques de traction plus en rapport avec celles des métaux de base, notamment un allongement augmenté, une résistance à la rupture et une limite d'élasticité plus faibles tout en restant supérieures à celles des matériaux assemblés.

Autrement dit, invention vise à améliorer les propriétés des joints de soudure obtenus par soudage hybride laser-arc avec apport de fil fusible et gaz d'assistance.

La solution de l'invention est un procédé de soudage hybride mettant en oeuvre un faisceau laser combiné à un arc électrique avec apport de fil de soudage fusible et gaz de protection, dans lequel ledit fil est fondu par ledit faisceau laser et/ou ledit arc électrique de manière à réaliser un joint de soudure sur au moins une pièce en acier à souder, caractérisé en ce que ledit joint de soudure contient de 30 à 1000 ppm en poids de titane, au moins 0.7% en poids de manganèse, de 50 à 1000 ppm en poids d'oxygène et moins de 10% de nickel.

Selon le cas, le procédé de l'invention peut comprendre l'une ou plusieurs des caractéristiques techniques suivantes :
- la ou les pièces sont en acier ferritique.
- le joint de soudure a une microstructure de type ferrite aciculaire.
- la soudure comprend de 30 à 800 ppm de titane et/ou de 100 à 450 ppm d'oxygène, de préférence de 50 à 500 ppm de titane et/ou de 120 à 350 ppm d'oxygène.
- la soudure comprend de 0,7 à 2% en poids de manganèse et/ou moins de 1500 ppm en poids d'aluminium, de préférence de 0.8 à 1.7% de manganèse et/ou moins de 500 ppm d'aluminium, de préférence encore moins de 300 ppm d'aluminium.
- la soudure comprend de l'aluminium et de l'oxygène en des proportions telles que : [Al] / [O] < 2,5 où [Al] est la proportion pondérale d'aluminium et [O] est la proportion pondérale d'oxygène, de préférence [Al] / [O] < 1,5.
- la soudure comporte moins de 0,6% molybdène, moins de 80 ppm de bore, moins de 1% de silicium, moins de 0.20% de carbone, moins de 0.035 % de soufre et moins de 0.035% de phosphore, de préférence moins de 0.3% de molybdène, moins de 50 ppm de bore, de 0.1 à 0.6% de silicium et de 0,03 à 0,13% de carbone.
- la soudure comprend moins de 0.07% de niobium, moins de 0.07% de vanadium, de 1 à 200 ppm d'azote et moins de 1% de chrome, de préférence moins de 100 ppm d'azote, moins de 0.03% de niobium, moins de 0.05% de vanadium et moins de 0.3% de chrome.
- le gaz d'assistance du faisceau laser et/ou le gaz de protection de l'arc est un mélange gazeux contenant de l'oxygène jusqu'à 20 % en volume et/ou du CO₂ jusqu'à 40% en volume.
- le gaz d'assistance du faisceau laser est un mélange gazeux contenant, en outre, au moins un gaz inerte, de préférence de l'hélium, de l'argon ou leurs mélanges.
- le fil fusible est un fil plein ou un fil fourré contenant au moins un élément choisi parmi titane, manganèse, fer, nickel et éventuellement bore, molybdène, carbone ou du chrome.

Le fil de soudage massif ou fourré susceptible d'être utilisé dans un procédé de soudage hybride laser/arc avec apport de fil de soudage fusible et gaz de protection selon l'invention, comprend de 100 à 10 000 ppm de titane, de 50 à 5000 ppm d'oxygène, jusqu'à 1500 ppm de bore, et le reste étant essentiellement constitué de fer.

En particulier, le fil contient un ou des éléments d'alliage des aciers ferritiques choisis parmi le manganèse, le silicium, le molybdène, le nickel, et le carbone.

Plus généralement, les soudures effectuées par les procédés traditionnels de soudage à l'arc mais sans laser peuvent présenter diverses microstructures parmi lesquelles il existe la structure appelée ferrite aciculaire qui possède d'excellentes propriétés de ténacité.

Ce type de micro-structure est spécifique aux soudures et ne se rencontre jamais dans les aciers, même lorsqu'on leur fait subir des conditions de refroidissement similaires à celles des soudures.

En revanche, dans les soudures, une telle micro-structure peut apparaître, dans certains cas, pour une très grande gamme de vitesses de refroidissement depuis l'état austénitique, y compris celles qui, dans le cas des aciers classiques, conduisent à des structures de trempe de type martensite et/ou bainite inférieure qui sont dures et fragiles, comme rappelé par le document Antunes M., Bonnet C., « Application d'un essai de trempabilité à la recherche des facteurs ayant une influence sur la formation de ferrite aciculaire », Journées d'information Métallurgie de la zone fondue, Société Française de Métallurgie/Société des Ingénieurs Soudeurs - Section sud-est, Conférence N°9, Publication de la Soudure Autogène, 1981.

La ferrite aciculaire n'existe dans le métal fondu qu'en présence de certaines inclusions qui servent de germes intragranulaires pour la ferrite lors de la transformation de l'austénite durant le refroidissement.

On sait que l'existence de ces inclusions dépend de la teneur en oxygène de la zone fondue mais, pour qu'il y ait germination intragranulaire de ferrite au refroidissement, il semble nécessaire que ces inclusions complexes présentent localement en leur surface de l'oxyde de titane TiO ou un oxyde de titane/manganèse MnTi₂O₄, comme décrit par Blondeau R., « Métallurgie et mécanique du soudage », Hermes Science, Lavoisier 2001, page 162.

Il est alors clair que le titane joue un rôle fondamental.

Toutefois, il ne suffit pas d'avoir un minimum de titane, typiquement quelques dizaines de ppm en poids, pour que celui-ci se retrouve sous l'une ou l'autre des formes souhaitées.

En effet, il est aussi indispensable que la cinétique des réactions d'oxydo-réductions qui conduisent à la formation des inclusions permette d'atteindre ce résultat.

Ainsi, en plus de la teneur en titane et de la teneur en oxygène, la nature et la quantité de l'ensemble des éléments désoxydants, c'est-à-dire les éléments ayant une forte affinité pour l'oxygène, tels que aluminium, silicium, calcium... éventuellement présents dans le métal fondu, vont aussi intervenir et avoir un impact non négligeable sur la micro-structure résultante, et ce, quelle que soit l'origine de ces éléments : fil, métal de base ou gaz.

De plus, la teneur en azote doit aussi intervenir car, si le titane et l'aluminium sont avides d'oxygène, ces éléments présentent aussi une forte affinité pour l'azote si bien que l'azote, ainsi que tous les éléments qui en sont avides, tels que le bore, le vanadium, le niobium..., vont interférer dans les réactions d'oxydo-réductions et conditionner l'apparition dans le métal fondu des inclusions nécessaires à la transformation de l'austénite en ferrite aciculaire.

Or, le métal fondu résultant du soudage hybride laser-arc avec ou sans métal d'apport ne réunit généralement pas les conditions nécessaires à la germination de la ferrite aciculaire si bien que le plus souvent il présente une microstructure martensitique ou martensite/bainite dure et fragile, incompatible avec un grand nombre d'applications.

Compte tenu de ce qui précède, la solution de l'invention permettant de pallier ces problèmes consiste à apporter, lors du soudage hybride laser-arc, dans le métal fondu par le biais du fil ou préférentiellement du couple fil/gaz, les éléments permettant la formation d'inclusions favorables à la germination de la ferrite aciculaire.

Toutefois, pour ce faire, il faut tenir compte du fait que ce qui importe au final est l'analyse chimique du métal fondu, lequel résulte d'un mélange entre le métal de base et le métal déposé par le couple fil/gaz utilisé, la proportion de l'un et de l'autre s'exprimant généralement en soudage par le taux de dilution qui est la proportion de métal de base dans le métal fondu ; la proportion étant celle en poids, en volume ou en surface évaluée à partir d'une macrographie puisqu'il s'agit d'une proportion et que les densités du métal de base et du métal déposé sont quasiment les mêmes.

Ainsi, si l'on réalise par exemple une soudure dont le taux de dilution est de 80% en poids, la teneur en chacun des éléments dans le métal fondu sera égale à 80% de la teneur en cet élément dans le métal de base auquel s'ajoute 20% de la teneur en ce même élément dans le métal déposé par le fil ou le couple fil/gaz.

Ce qui précède montre que le problème est extrêmement complexe.

Cependant, les essais menés dans le cadre de la présente invention et donnés ci-dessous à titre illustratif, montrent qu'il est possible de proposer des solutions qui fonctionnent dans la plupart des cas, c'est-à-dire qui conduisent à la formation de microstructures non fragiles dans le métal déposé, en ajustant les proportions de certains éléments particuliers au sein de la soudure, donc également en contrôlant leurs proportions relatives dans les matériaux d'apport, notamment via le couple fil/gaz.

### Ajustement de la teneur en oxygène du métal fondu

Les aciers actuels ont une teneur en oxygène très faible, généralement moins de 30 ppm en poids, et contiennent le plus souvent une teneur résiduelle en aluminium, typiquement de l'ordre de 100 à 500 ppm en poids, car cet élément est utilisé comme élément de calmage, lors de l'élaboration de ces aciers.

De ce fait, tout l'oxygène présent dans ces aciers se retrouve sous forme d'inclusions d'aluminates, lesquelles ne sont pas susceptibles de servir de germe pour la ferrite aciculaire.

Même en ajoutant du titane par l'intermédiaire du fil d'apport, celui ci ne peut pas se retrouver sous la forme des oxydes nécessaires à la germination de la ferrite aciculaire car l'aluminium est plus réactif que le titane vis-à-vis de l'oxygène et de par l'élaboration même des aciers, il est toujours en excès par rapport à l'oxygène résiduel de l'acier.

Si l'on veut être en mesure de former des oxydes de titane dans le métal fondu, il faut donc impérativement augmenter sa teneur en oxygène par rapport à celle du métal de base de manière à ce que, même après réaction avec l'aluminium, il reste de l'oxygène en excès afin qu'il puisse réagir avec le titane.

Plusieurs moyens peuvent être utilisés indépendamment ou conjointement pour apporter de l'oxygène dans le métal fondu :
- le gaz d'assistance utilisé pour le soudage laser peut contenir de l'oxygène ou du CO₂, ce dernier se décomposant en libérant de l'oxygène du fait des hautes températures existant au voisinage du métal liquide lors de l'exécution de la soudure, et/ou
- le fil d'apport de type massif ou fourré dont la teneur en oxygène peut être beaucoup plus importante que celle du métal de base ; ainsi, un fil massif peut contenir plusieurs centaines de ppm d'oxygène et un fil fourré peut en contenir plusieurs milliers, et/ou
- le gaz de protection utilisé pour la partie "arc", dans le cas du soudage hybride arc/Laser qui, selon la conception de l'équipement de soudage hybride, peut être ou non différent du gaz de protection assistant le faisceau laser.

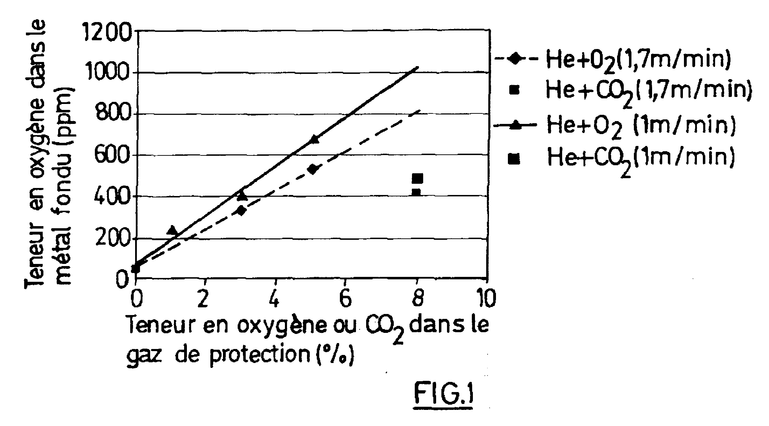

La Figure 1 montre l'évolution en soudage hybride arc-laser, plus précisément en soudage hybride MAG/laser CO₂, de la teneur en oxygène dans le métal fondu en fonction de la teneur en oxygène dans l'hélium ainsi que la teneur en oxygène dans le métal fondu pour le mélange He + 8% CO₂ (% en volume) en utilisant dans tous les cas une puissance soit de 6 kW, soit de 8 kW, et le même métal d'apport constitué d'un fil massif de diamètre 1,2 mm et de type G2Si selon la norme EN 440.

Les essais ont été réalisés sur une épaisseur soudée de 6 mm, à une vitesse de soudage de 1 m/min à 6 kW et 1.7 m/min à 8 kW, pour un débit gaz de 30 l/min, pour une vitesse de fil de 14 m/min, une intensité de 370-390 A et une tension de 39-42V.

Comme on le voit sur la Figure 1, la proportion en oxygène du métal fondu d'une soudure obtenue par soudage hybride arc-laser augmente lorsque la teneur en oxygène dans le gaz d'assistance augmente.

On voit aussi que comme dans le cas du soudage laser seul ou du soudage à l'arc seul, le remplacement de l'oxygène par du CO₂ en teneur équivalente, conduit à une moindre augmentation de la teneur en oxygène dans le métal fondu

Des tests complémentaires menés en parallèle montrent que la quantité d'oxygène à respecter dans les soudures doit être comprise entre approximativement 50 et 1000 ppm, mais nous verrons ultérieurement que la limite inférieure est en fait fonction de la teneur en aluminium du métal fondu. La limite supérieure résulte du fait que l'augmentation de la teneur en oxygène se traduit par une augmentation de la densité d'inclusions dans la soudure ce qui engendre une diminution de l'énergie de rupture au niveau ductile (voir R. Blondeau : « Métallurgie et mécanique du soudage », Hermès Science, Lavoisier 2001). Il est donc inutile d'introduire plus d'oxygène que la quantité nécessaire à l'obtention des inclusions indispensables pour la germination de la ferrite aciculaire

### Ajustement de la teneur en titane du métal fondu

Le titane étant indispensable pour que les inclusions jouent effectivement le rôle de germes pour la transformation de l'austénite en ferrite aciculaire lors du refroidissement de la soudure, il s'avère nécessaire d'en apporter par l'intermédiaire du fil massif ou fourré si le métal de base, c'est-à-dire la ou les pièces à souder, n'en contient pas en quantité suffisante.

Ainsi, il a été remarqué que, quel que soit le procédé de soudage, il n'apparaît pas de ferrite aciculaire si la teneur en titane du métal fondu est inférieure à 30 ppm en poids et qu'au delà d'une certaine valeur pouvant varier entre environ 800 et 1000 ppm, la transformation en ferrite aciculaire est supprimée ou fortement détériorée.

Il faut donc que le métal fondu, c'est-à-dire le mélange du métal de base et du métal déposé en proportion du taux de dilution, contienne entre 30 et 1000 ppm de titane, préférentiellement entre 50 et 800 ppm en poids.

Idéalement, il faut que la composition chimique du métal déposé, laquelle résulte de la composition chimique du fil utilisé et des réactions avec le gaz d'assistance laser et/ou de protection de l'arc (voir Figure 1 et Tableau 5), contienne une quantité de titane suffisante pour que, lorsque le métal déposé issu de la fusion du fil se mélange avec le métal de base en proportion correspondant au taux de dilution, le mélange ainsi obtenu contienne une teneur en titane comprise entre environ 30 et 1000 ppm.

En pratique, étant donné que la gamme de teneur en titane acceptable est relativement large, atteindre cet objectif est relativement simple car la plupart des métaux de base ne contiennent pas de titane et pour les autres, leur teneur est généralement inférieure à 200 ou 250 ppm.

Dans ces conditions, on voit que si on utilise un fil équilibré chimiquement pour déposer, avec le gaz utilisé, un métal qui contient entre 150 et 1000 ppm en poids de titane, le mélange avec le métal de base aura une teneur en titane dans le domaine requis pour la transformation en ferrite aciculaire pour un taux de dilution compris entre 80% et 0%, si l'on soude un acier ne contenant pas de titane, et quel que soit le taux de dilution si l'on soude un acier qui en contient typiquement moins de 800 ppm.

L'analyse du métal déposé n'est jamais identique à l'analyse du fil et le coefficient de transfert des divers éléments, c'est-à-dire le rapport entre la teneur en cet élément dans le métal déposé à sa teneur dans le fil, est fonction de tous les éléments présents dans le fil mais aussi, pour certains éléments, de la nature du gaz de protection.

Ainsi, si on veut avoir 200 ppm de titane dans le métal déposé, la teneur dans le fil ne sera pas la même selon les autres éléments présents, tels C, Mn...

Autrement dit, pour que la teneur en titane du métal fondu soit comprise entre 30 et 1000 ppm, de préférence entre 50 et 800 ppm, il faut alors, si le métal de base dilué dans le métal fondu ne permet pas d'atteindre la valeur minimale, apporter le titane nécessaire au moyen du fil d'apport en tenant compte du taux de dilution, tel qu'expliqué précédemment, mais aussi du coefficient de transfert en titane entre le fil et le métal déposé, le coefficient de transfert étant le rapport entre la teneur en titane du métal déposé et celle du fil utilisé. Ce coefficient est toujours inférieur à 1 et il est d'autant plus faible que le pouvoir d'oxydation du gaz utilisé est important, c'est-à-dire que le gaz de protection de l'arc dans le cas du soudage hybride arc-laser contient d'autant plus d'oxygène et ou de CO₂.

### Ajustement de la trempabilité du métal fondu

La trempabilité est une notion bien connue des métallurgistes qui traduit l'aptitude d'un acier à acquérir une structure 100% martensitique.

La trempabilité peut être caractérisée notamment par la vitesse critique de trempe qui est la vitesse de refroidissement depuis l'état austénitique (haute température : en général supérieure à 900°C pour les aciers rencontrés en soudage) la plus lente qui permet de conférer à l'acier considéré une structure 100% martensitique.

Elle peut être évaluée à partir des diagrammes de transformations en refroidissement continu (TRC) qui traduisent sous forme graphique les diverses transformations structurales que subit un acier en fonction de la vitesse de refroidissement depuis l'état austénitique.

Plus le diagramme TRC est décalé vers la droite (temps long) dans les axes température/temps, moins la vitesse critique de trempe est grande et plus l'acier présente une trempabilité élevée.

Si les conditions sont réunies pour que les inclusions puissent être actives en tant que germes pour la transformation de l'austénite en ferrite aciculaire dans une soudure, ce qui dépend notamment des équilibrages en titane, aluminium, oxygène,... tel qu'expliqué précédemment, il faut aussi, pour que cette microstructure apparaisse, que l'austénite ne se soit pas préalablement transformée en produit de décomposition se formant à une température supérieure à celle de la ferrite aciculaire, sachant que la ferrite aciculaire se forme au refroidissement entre 550 et 450°C.

En effets, certains autres constituants microstructuraux, tels que ferrite de widmanstatten, perlite ou bainite granulaire, peuvent apparaître à des températures supérieures.

Il faut donc que le métal fondu ait une trempabilité suffisante pour éviter la transformation de l'austénite à une température supérieure à 550 °C dans les conditions de refroidissement propres aux soudures laser ou hybride arc/laser.

Autrement dit, il faut veiller à ce que la trempabilité du métal fondu, résultant du mélange du métal de base et du métal déposé en fonction du taux de dilution, ne soit pas trop faible pour éviter que l'austénite se transforme en constituants grossier et donc peu résilient avant d'atteindre le domaine de température permettant la transformation en ferrite aciculaire (en dessous de 550°C) ni trop grande afin d'éviter que l'austénite ne se transforme en martensite y compris en présence des inclusions favorables à la germination de la ferrite aciculaire.

La composition chimique du fil d'apport qui influence évidemment la trempabilité du métal fondu, doit donc être équilibrée en tenant compte de l'analyse du métal de base, du taux de dilution et des coefficients de transfert des divers éléments chimiques lesquels, tout comme pour le titane, sont fonction du pouvoir d'oxydation du mélange gazeux dans lequel transitent les gouttes de métal depuis le fil vers le bain de fusion, durant le soudage.

Bien que les cycles thermiques engendrés par le soudage hybride arc-laser soient très rapides en comparaison des cycles thermiques engendrés par les procédés de soudage plus classiques de type MIG/MAG, arc submergé, plasma ..., dans le cadre de l'invention, il n'a jamais été observé de formation de ferrite aciculaire dans des cordons obtenus par procédé hybride arc-laser dont la teneur en manganèse était inférieure à 0,7%.

Il conviendra donc de respecter dans le métal fondu une teneur minimale en manganèse de 0.7%, de préférence d'au moins 1 %.

En outre, il a été observé que la présence d'éléments d'alliage complémentaires, tels que molybdène, nickel, chrome ou bore, augmente généralement la proportion de ferrite aciculaire dans le métal fondu, cela étant particulièrement prononcé pour le bore surtout lorsqu'il est associé au molybdène mais des additions trop importantes peuvent être préjudiciables car une trop forte trempabilité du métal fondu conduira à une structure martensitique dure et fragile même si les inclusions nécessaires à la germination de la ferrite aciculaire sont présentes.

La distinction faite entre le bore et le molybdène par rapport aux autres éléments d'alliage s'explique par le fait que l'action de ces éléments sur la trempabilité est plus importante sur les transformations se produisant à haute température, c'est-à-dire à plus de 550°C, ce qui correspond à la partie haute des diagrammes TRC, que sur celles se produisant à plus basse température, c'est-à-dire à moins de 550°C.

Ainsi, en plus de la teneur minimale en manganèse de 0,7%, préférentiellement 1%, il pourra être intéressant d'introduire du bore et/ou du molybdène dans le métal fondu afin d'augmenter la proportion de ferrite aciculaire dans la soudure et par la même les résiliences à basse température,

### Ajustement de la teneur en oxygène du métal fondu

Les expériences menées dans le cadre de la présente invention ont montré qu'il est aussi nécessaire, pour obtenir une structure riche en ferrite aciculaire dans la soudure et par la même de bonnes ténacités à basse température, que le rapport Al/O soit inférieur à 2,5, de préférence inférieur à 1,5.

En effet, pour obtenir de bonnes valeurs de ténacité à basse température dans une soudure obtenu par procédé hybride arc/laser et éviter d'avoir des duretés trop élevées dans le métal fondu, il faut former dans le métal fondu des inclusions susceptibles de servir de germes pour que la transformation de l'austénite au refroidissement produise de la ferrite aciculaire et, comme indiqué précédemment, ces inclusions d'oxydes riches en titane ne peuvent se former que si tout l'oxygène présent dans le métal fondu n'est pas intégralement lié à l'aluminium dont la réactivité vis-à-vis de l'oxygène est supérieure à celle du titane. L'expérience montre que cela n'est le cas que si le rapport pondéral Al/O dans le métal fondu est inférieur à 2,5.

Pour satisfaire cette condition, l'aluminium provenant essentiellement de la dilution du métal de base dans la soudure, il convient d'enrichir le métal fondu en oxygène par l'intermédiaire du fil, du gaz de soudage ou de la combinaison fil/gaz mise en oeuvre lors du soudage laser-arc.

Des essais réalisés dans le cadre de la présente invention (voir ci-après) montrent que d'excellents résultats de ductilité, ténacité et résilience, sans duretés excessives, sont obtenus dans des soudures réalisés par mise en oeuvre d'un procédé hybride arc-laser, lorsque l'analyse du métal fondu, c'est-à-dire de la soudure, contient les éléments donnés dans le Tableau 1 suivant (teneurs exprimées en proportion pondérale).

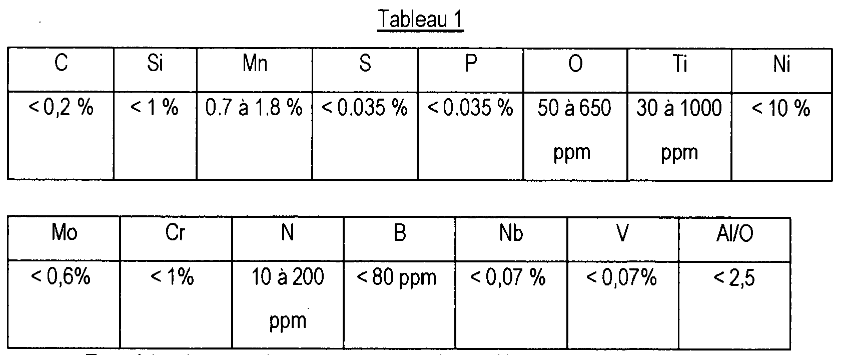

Toutefois, les soudures présentent de meilleures caractéristiques lorsqu'elles contiennent les éléments du Tableau 1 dans les proportions préférentielles du Tableau 2 suivant (teneurs exprimées en proportion pondérale).

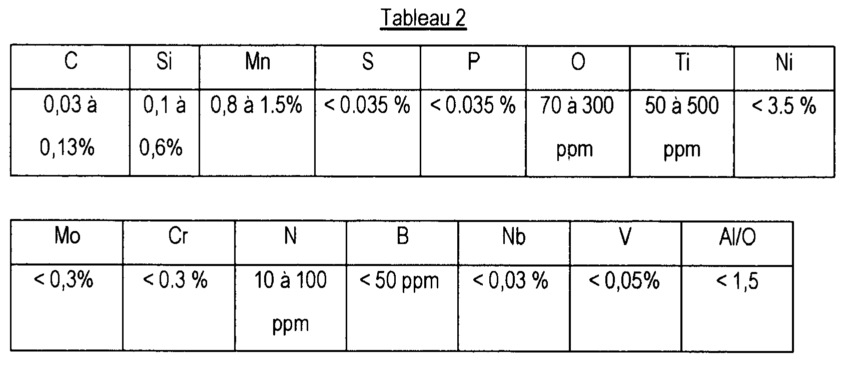

Les plages analytiques des Tableaux 1 et 2 correspondent au métal fondu qui résulte de l'analyse du métal de base ou des métaux de base si l'on assemble par soudage deux pièces en des aciers différents, et de celle du métal déposé dépendant du fil, du gaz ou du couple fil/gaz, et en prenant en compte le taux de dilution.

En pratique, pour satisfaire ces fourchettes et obtenir une soudure selon l'invention, il convient de procéder comme suit.

On détermine la composition du métal de base constituant les pièces à assembler (ou la pièce s'il s'agit de souder les bords d'un tube) ou une composition moyenne correspondant à celles des deux métaux de base si les pièces sont en des aciers différents.

On évalue le taux de dilution, c'est-à-dire la proportion du métal de base dans la soudure à réaliser.

On détermine ensuite la composition du métal à déposer (couple fil/gaz) pour que le mélange métal de base + métal déposé conduise à une composition du métal fondu, c'est-à-dire de la soudure, dans les plages des tableaux 1 ou 2 ci-dessus, en prenant en compte le taux de dilution évalué.

Ainsi, par exemple, si la teneur en manganèse (Mn) du métal de base est de 1% et que le taux de dilution est estimé à 80%, la fourchette préférentielle (voir Tableau 2) en manganèse pour le métal fondu comprise entre 0,8 et 1,5% est respectée si la teneur en manganèse du métal déposé (couple fil/gaz) est comprise entre 0 et 3,5% puisque, pour une teneur en Mn de 1 % dans le métal de base (i.e. dans l'acier des pièces à souder) et un taux de dilution de 80%, on obtiendra une soudure, c'est-à-dire un métal fondu, contenant 80% de Mn issu du métal de base et donc 20 % de Mn issu du métal déposé (couple fil/gaz).

Donc, pour obtenir une soudure contenant 0.8% de Mn (valeur basse de la plage du Tableau 2), alors il convient d'utiliser un fil (métal déposé) exempt de Mn, c'est-à-dire sans Mn. Autrement dit, dans ce cas, tout le manganèse qui se retrouvera dans la soudure est uniquement issu de l'acier des pièces à souder.

Par contre, pour obtenir une soudure contenant 1.5 % de Mn (valeur haute de la plage du Tableau 2), il convient d'utiliser un couple fil/gaz conduisant à un métal déposé contenant environ 3.5 % de Mn, puisque, dans ce cas, le manganèse qui se retrouvera dans la soudure sera issu à 80% de l'acier des pièces à souder (soit 0,8% sur les 1.5% souhaités) et à 20% du couple fil/gaz (soit 0,7% sur les 1.5% souhaités).

Un calcul analogue peut être fait pour chacun des éléments chimiques à introduire dans la soudure, ce qui permet de définir précisément la composition du métal à déposer, c'est-à-dire du couple fil/gaz, en fonction des pièces à souder.

Il est à remarquer qu'étant donné que le taux de dilution, c'est-à-dire que la proportion de métal de base dans le métal fondu des soudures laser avec fil rapport, est généralement de l'ordre de 60 à 80%, le métal déposé par le couple fil/gaz, donc le fil d'apport, doit contenir très peu ou, au contraire, une quantité élevée de manganèse, selon la teneur en manganèse du ou des métaux de base, et le plus souvent de fortes teneurs en titane et bore par rapport aux plages visées pour le métal fondu, afin que le faible pourcentage de métal déposé dans la soudure permette d'atteindre les milieux des plages de valeurs recommandées pour ces éléments dans la soudure.

Par ailleurs, concernant les éléments Cr, N, V et Nb, en pratique, il n'y a qu'un très faible intérêt à avoir ces éléments dans la soudure.

Toutefois, leur présence est quasi inévitable de par la dilution avec le métal de base qui contient souvent plusieurs d'entre eux ou parce qu'ils sont présents en tant qu'impuretés résiduelles inévitables dans les métaux à assembler ou dans le produit d'apport (cas de l'azote par exemple).

Il convient donc de veiller à ce que leurs teneurs soient aussi faibles que possibles et n'excèdent jamais les valeurs maximales données dans les tableaux 1 et 2 ci-avant.

En outre, concernant l'élément Ni, la teneur maximale de 10% donnée dans le Tableau 1 correspond au cas très particulier des aciers à 9% de nickel.

Lorsqu'on soude de tels aciers à teneur très élevée en nickel, on s'assure au préalable que la teneur en oxygène n'est pas trop élevée et, le cas échéant, on ajuste cette teneur en oxygène pour la rendre compatible au soudage de ce type d'acier au nickel, c'est-à-dire que préférentiellement on travaille avec des teneurs en oxygène proches de la valeur basse de la plage d'oxygène du Tableau 1.

Hormis ces aciers à forte teneur en nickel, les aciers les plus classiques pourront être soudés efficacement en respectant des teneurs en nickel maximales dans la soudure de l'ordre de 2 à 3% en poids environ.

Compte tenu de ce qui précède, il a été mis en évidence des plages de compositions du métal à déposer par le couple fil/gaz qui permettent d'obtenir les compositions du métal fondu de la soudure des Tableaux 1 ou 2. Ces plages sont données dans le Tableau 3.

Le métal déposé doit préférentiellement avoir une analyse métallurgique correspondant à la partie haute des plages de composition, lorsque le taux de dilution du métal de base dans la soudure est élevé (> 85%). Au contraire, son analyse doit plutôt correspondre à la partie basse des plages indiquées lorsque le taux de dilution est significativement plus faible, par exemple 75% ou moins.

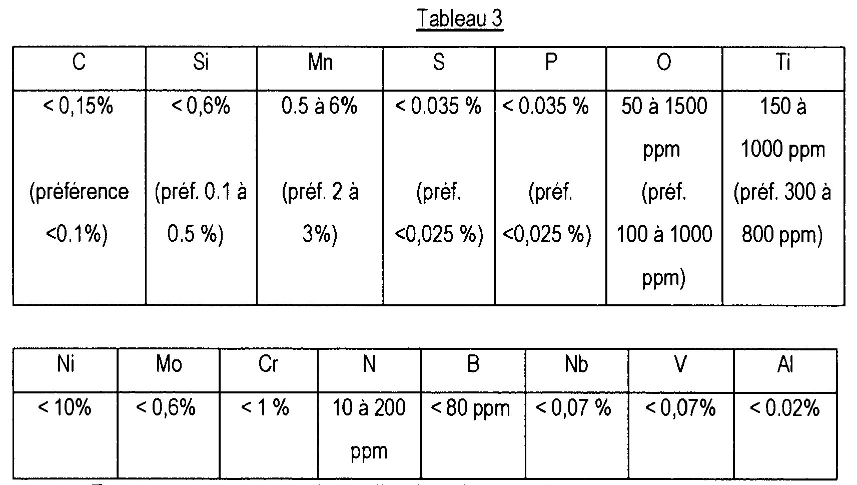

En outre, comme susmentionné, l'analyse du métal déposé par le couple fil/gaz utilisé lors du soudage hybride arc-laser dépend de l'analyse du fil et du pouvoir d'oxydation du mélange gazeux car celui ci conditionne les coefficients de transfert des divers éléments d'alliage contenus dans le fil.

Dans le cas du soudage hybride arc-laser, qu'il soit de type TIG ou plasma, le métal d'apport est apporté sous forme d'un fil fusible froid.

Dans ce cas, les échanges chimiques sont relativement faibles et l'on note seulement des différences significatives en ce qui concerne la teneur en oxygène qui peut être augmentée par rapport à celle du fil lorsque celui ci n'en contient qu'une faible quantité (fils massifs dont la teneur en oxygène est inférieure à 150 ppm) ou diminuée lorsque le fil en contient beaucoup comme c'est par exemple le cas de certains fils fourrés type « Metal cored ». En revanche, les teneurs en manganèse, silicium et titane sont toujours plus faibles dans le dépôt que dans le fil, l'écart étant d'autant plus grand que le potentiel d'oxydation du gaz d'assistance laser est important, à savoir la teneur en oxygène et/ou CO₂.

Il est à noter qu'en soudage TIG et plasma, on ne peut pas utiliser des gaz de protection oxydants car sinon on détruirait l'électrode de tungstène.

Toutefois, dans le cas où l'équipement de soudage hybride permet d'avoir deux amenées de gaz distinct, l'une d'assistance du faisceau laser et l'autre pour l'arc TIG ou plasma, le gaz d'assistance laser peut être différent et donc contenir de l'oxygène car, dans ce cas, ce gaz oxydant n'est pas en contact direct de l'électrode en tungstène.

De même, on peut aussi utiliser une torche à plasma double flux ou TIG double flux, c'est-à-dire des torches à deux circuits gaz, dans lesquelles le gaz central ou gaz plasmagène ne contient pas d'oxygène, alors que le gaz annulaire peut en contenir car il n'est pas au contact direct de l'électrode.

En soudage hybride GMAW/laser, il s'opère un transfert de gouttes de métal liquide depuis l'extrémité du fil fusible vers le bain liquide au travers de l'arc, ce qui implique des échanges chimiques beaucoup plus intenses et des pertes en éléments beaucoup plus prononcées.

Des exemples de transferts chimique dans l'arc en fonction de la nature et de la proportion des constituants oxydants du gaz de protection avec différents types de fils sont donnés dans le Tableau 4 qui donne les analyses de fils et du métal déposé obtenues avec ces fils en utilisant des gaz de protection ayant différents composés oxydants en soudage hybride MAG/Laser.

**Tableau 4**

| Composants oxydants du gaz de protection | | C | Mn | Si | Mo | Ni | Ti | B | N | O |
|---|---|---|---|---|---|---|---|---|---|---|
| Fil: MC1 | - | 0,006 | 1,65 | 1,06 | - | - | 0,11 | 0,0050 | 0,0033 | 0,2350 |
| Métal déposé | 18% CO2 | 0,011 | 1,33 | 0,88 | - | - | 0,041 | 0,0050 | 0,0045 | 0,0548 |
| | 3%CO2+1 %O2 | 0,010 | 1,45 | 1,02 | - | - | 0,058 | 0,0050 | 0,0046 | 0,0420 |
| Fil : MC2 | - | 0,15 | 1,74 | 0,57 | 0,32 | 0,93 | 0,08 | 0,0009 | 0,0050 | 0,2120 |
| Métal déposé | 10%CO₂ | 0,085 | 1,44 | 0,41 | 0,31 | 0,92 | 0,020 | 0,0001 | 0,0055 | 0,0454 |
| Fil : F1 | - | 0,105 | 1,70 | 0,59 | 0,31 | 0,95 | 0,067 | 0,0009 | 0,0066 | 0,0150 |
| Métal déposé | 18%CO₂ | 0,089 | 1,37 | 0,47 | 0,30 | 0,91 | 0,025 | 0,0004 | 0,0073 | 0,0400 |
| | 10%CO₂ | 0,083 | 1,57 | 0,55 | 0,30 | 0,94 | 0,032 | 0,0004 | 0,0082 | 0,0276 |
| | 3%O₂ | 0,077 | 1,54 | 0,54 | 0,30 | 0,93 | 0,028 | 0,0004 | 0,0074 | 0,0229 |
| Fil: F2 | - | 0,047 | 1,69 | 0,79 | - | - | 0,14 | 0,0010 | 0,0025 | 0,0043 |
| Métal déposé | 9%CO₂ | 0.067 | 1,35 | 0,62 | - | - | 0,069 | 0,0009 | 0,0047 | 0,0271 |
| | 1,5% O₂ | 0,040 | 1,54 | 0,68 | - | - | 0,080 | 0,0009 | 0,0048 | 0,0214 |

Les teneurs en impuretés résiduelles n'ont pas été reportées dans le tableau 4. Par ailleurs, les fils repérés MCx sont des fils fourrés sans laitier et les fils repérés Fx sont des fils massifs.

Les résultats consignés dans le Tableau 4 montre très clairement que l'analyse du métal déposé est toujours significativement différente de l'analyse du fil utilisé, l'amplitude des écarts étant fonction de la nature et de la quantité des gaz oxydants présents dans le mélange gazeux dans lequel jaillit l'arc.

Plus le mélange gazeux est oxydant, plus les pertes en éléments ayant une forte affinité pour l'oxygène tels que manganèse, silicium, titane, ... sont importantes alors que la teneur en oxygène dans le métal déposé peut augmenter ou diminuer par rapport à celle du fil utilisé selon la teneur en oxygène de ce fil.

En ce qui concerne le carbone, le résultat est différent selon la nature du gaz oxydant et la concentration en carbone du fil utilisé.

Lorsque l'élément oxydant est l'oxygène, on observe toujours une diminution de la teneur en carbone du métal déposé par rapport à celle du fil, diminution d'autant plus importante que la teneur en oxygène du gaz de protection est grande.

Lorsque l'élément oxydant est le CO₂, le métal déposé s'enrichit en carbone par rapport au fil si celui-ci à une très faible teneur en carbone. En revanche, on observe une baisse de la teneur en carbone dans le dépôt si la teneur en carbone du fil est élevé.

Le point d'équilibre, c'est-à-dire la teneur en carbone du fil qui conduit à une teneur identique dans le dépôt est une fonction croissante de la teneur en CO₂ du gaz de protection et se situe au voisinage de 0,08% en poids du fil pour une teneur en CO₂ de 20% en volume.

Les exemples suivant illustrent l'ensemble des règles énoncées précédemment lesquelles permettent d'améliorer les propriétés des joints soudés par le procédé hybride MAG / Laser.

Les 3 essais ont été effectués avec des tôles de 8 mm d'épaisseur d'un même lot dont l'analyse chimique est reportée dans le Tableau 6.

Ces essais se distinguent d'une part par la nature du gaz de protection et d'autre part par la nature du fil d'apport utilisé; Dans les 3 cas, la puissance de tir du laser CO2 utilisé a été de 8 kW, la vitesse de soudage de 2,1 m/min et les paramètres de l'arc électrique ont été ajustés pour obtenir le même taux de dépôt quel que soit le fil utilisé. En effet, comme indiqué précédemment, deux fils ont été utilisés pour ces essais, lesquels avaient un diamètre de 1,2 mm mais l'un était un fil massif et l'autre un fil fourré de poudres métalliques (type « Metal cored »). Ces fils n'ont pas la même densité, ce qui impose de mettre en oeuvre une vitesse fil plus importante pour le fil fourré que pour le fil massif si l'on veut avoir le même taux de dépôt avec les deux fils.

Cette différence entre fil fourré et fil massif implique aussi que les intensités qui permettent d'obtenir ces mêmes taux de dépôt ne sont pas identiques : un fil fourré ayant une résistance électrique plus grande qu'un fil massif de même diamètre sa vitesse de fusion pour une intensité donnée est plus grande que celle d'un fil massif (le courant passe par l'enveloppe métallique du fil fourré qui a bien entendu une section plus faible que celle du fil massif de même diamètre et donc une résistance plus grande).

De ce fait, l'intensité du courant nécessaire pour fondre la même masse de fil par unité de temps (taux de dépôt) est plus faible pour le fil fourré que pour le fil massif. Les paramètres électriques ont aussi été ajustés pour obtenir la même longueur d'arc quel que soit le gaz de protection employé ; cela implique d'utiliser une tension de soudage un peu plus grande lorsque le gaz de protection ne contient pas de composé actif, c'est-à-dire d'oxygène dans ce cas.

L'ensemble des conditions de soudage des joints J27, J29 et J34 fait l'objet du Tableau 5.

**Tableau 5**

| Echantillon | Gaz | Fil | Pₗₐₛₑᵣ kW | V_{soudage} m/min | V_{fil} m/min | Intensité A | Tension V |
|---|---|---|---|---|---|---|---|
| J27 | (70%He+30%Ar)+ 3%O₂ | FA7 | 8 | 2.1 | 9.2 | 321 | 34,2 |
| J29 | (70%He+30%Ar) + 3%O₂ | MC20 | 8 | 2.1 | 9.8 | 292 | 34,2 |
| J34 | 70%He+30%Ar | FA7 | 8 | 2.1 | 9.2 | 321 | 35,4 |
| | | | | | | | |

Les analyses chimiques des tôles utilisées, des fils et des trois soudures sont reportées dans le Tableau 6, ainsi que les valeurs de dureté dans le métal de base et les soudures.

**Tableau 6**

| Eléments (% en poids) | Tôle épaisseur 8 mm | ZF J27 | ZF J29 | ZF J34 | Fil massif FA7 | Fil fourré MC20 |
|---|---|---|---|---|---|---|
| C | 0.11 | 0.10 | 0.10 | 0.11 | 0.057 | 0.092 |
| Si | 0.006 | 0.12 | 0.13 | 0.24 | 0.72 | 0.75 |
| Mn | 1.45 | 1.44 | 1.46 | 1.45 | 1.33 | 2.08 |
| P | 0.011 | 0.013 | 0.014 | 0.018 | 0.021 | 0.011 |
| S | 0.008 | 0.009 | 0.012 | 0.016 | 0.025 | 0.008 |
| Cr | 0.028 | 0.031 | 0.027 | 0.039 | 0.057 | 0.048 |
| Mo | < 0.001 | < 0.001 | < 0.001 | 0.005 | 0.015 | <0.001 |
| Ni | 0.036 | 0.035 | 0.031 | 0.036 | 0.040 | 0.027 |
| Al | 0.031 | 0.025 | 0.021 | 0.023 | --- | 0.007 |
| Co | 0.010 | 0.009 | 0.009 | 0.007 | 0.005 | 0.008 |
| Cu | 0.009 | 0.024 | 0.023 | 0.043 | 0.13 | 0.09 |
| Nb | 0.038 | 0.026 | 0.023 | 0.029 | 0.004 | <0.001 |
| Ti | 0.002 | 0.001 | 0.007 | 0.003 | 0.002 | 0.053 |
| V | 0.001 | < 0.001 | < 0.001 | 0.004 | 0.002 | <0.001 |
| B | 0.0003 | 0.0001 | 0.0016 | 0.0007 | 0.0008 | 0.0055 |
| N | 0.0040 | 0.0098 | 0.0062 | 0.0057 | 0.0076 | 0.0042 |
| O ppm | 0.0022 | 0.0310 | 0.0250 | 0.0030 | 0.0280 | 0.2420 |
| Al/0 | 14.1 | 0.81 | 0.84 | 7.7 | - | 0.03 |
| Dureté | 175 | 253 | 250 | 302 | - | - |
| Hv0,5 | | | | | | |

Dans ce tableau 6, la comparaison des soudures J34 et J27 montre que l'addition d'un composant oxydant dans le gaz de protection conduit à une augmentation de la teneur en oxygène dans le métal fondu, ce qui se traduit par une très nette diminution de sa dureté laquelle se rapproche ainsi de celle du métal de base et confère au joint soudé des propriétés plus homogène.

On constate aussi en comparant le joint J29 qui a été obtenu en combinant le gaz oxydant avec le fil fourré MC20, au joint J27 obtenu en utilisant le fil massif FA7 associé au même gaz oxydant, que bien que le fil fourré MC20 soit beaucoup plus chargé en manganèse que le fil massif FA7, les teneurs en manganèse des soudures J27 et J 29 sont tout à fait similaires. Cela résulte du fait que le fil fourré contient beaucoup plus d'oxygène que le fil massif et que cet oxygène diminue significativement le transfert en manganèse du fil dans le métal déposé.

On voit par ailleurs que, par rapport au fil massif F7A, le fil fourré contient du titane et du bore que l'on retrouve en partie dans le joint J29, l'écart entre le fil et le joint provenant non seulement du coefficient de transfert de ces éléments qui est très inférieur à l'unité mais aussi de la dilution avec le métal de base, les joints soudés étant composés, pour une part, du métal de base et, pour une autre part, du métal déposé en proportion du taux de dilution tel qu'expliqué précédemment.

On voit enfin que, malgré cette présence complémentaire de titane et de bore, éléments qui ont normalement pour effet d'augmenter la trempabilité de l'acier, la dureté du joint soudé J29 est légèrement inférieure à celle du joint J27 qui n'en contient pas.

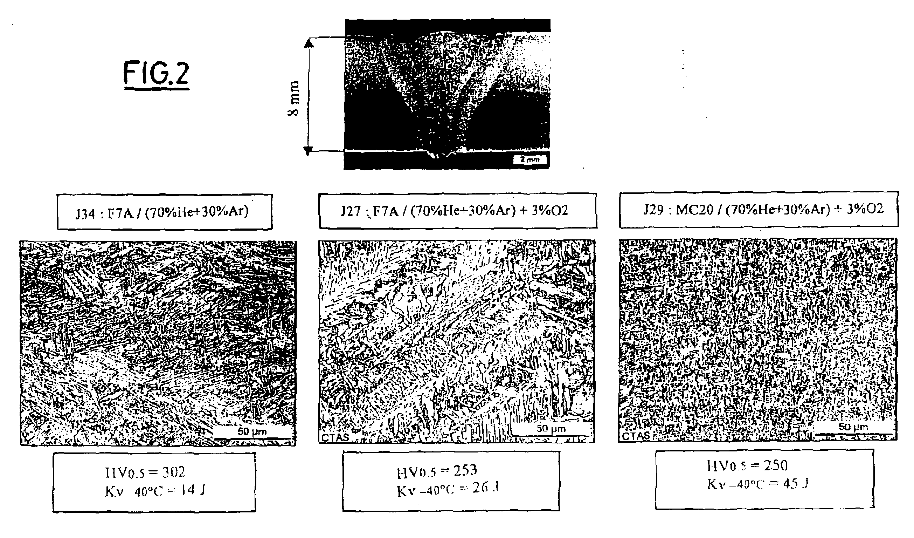

Tout ceci est en parfaite cohérence avec ce qui précède et traduit, en fait, l'évolution de la microstructure du joint soudé de par la présence d'oxygène qui augmente le taux d'inclusions et diminue ainsi la trempabilité en piégeant une partie des éléments d'alliage (Joint J34 et J27) et de par la présence de titane qui permet à ces inclusions de jouer le rôle de germes pour la transformation de l'austénite en ferrite aciculaire au cours du refroidissement lorsque le rapport Al/O est inférieur à 2,5 (joint J27 et J29), ce que l'on peut constater sur la Figure 2 qui présente la macrographie, les microstructures ainsi que les duretés de ces 3 joints.

Sur la Figure 2, ont aussi été reportées les valeurs de résilience à - 40°C mesurées avec des éprouvettes réduites Charpy-V de 5x10 mm, l'épaisseur des tôles assemblées ne permettant pas d'utiliser des éprouvettes standard de 10x10 mm.

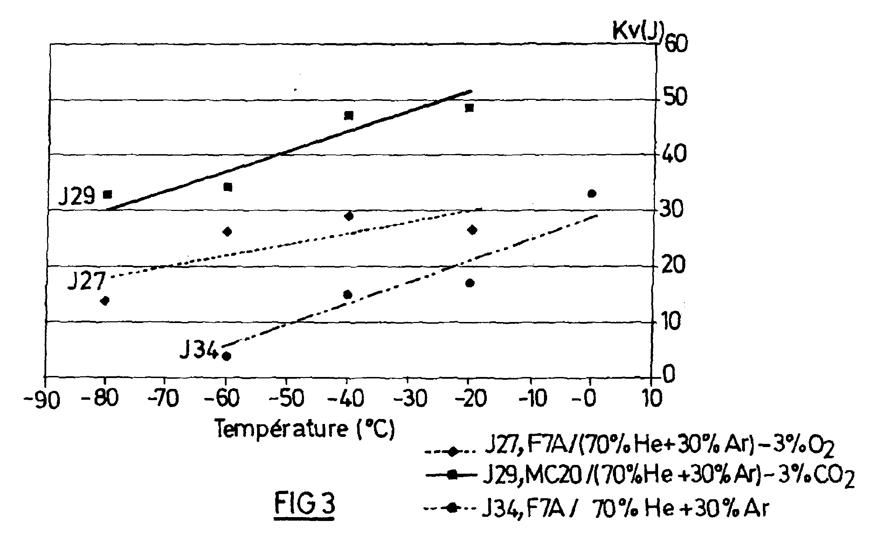

Ces valeurs de résilience à - 40 °C comme les courbes de transition représentées sur la figure 3 illustrent l'amélioration de la ténacité des joints soudés, lorsque l'on augmente la teneur en oxygène du métal fondu et que l'on permet la transformation de l'austénite en ferrite aciculaire en apportant le titane et l'oxygène et en respectant le rapport Al/O indiqué précédemment, ces 3 conditions s'avérant indispensables à la germination de cette ferrite aciculaire dont la finesse est à l'origine des bonnes propriétés de ténacité.

## Revendications

1. Procédé de soudage hybride mettant en oeuvre un faisceau laser combiné à un arc électrique avec apport de fil de soudage fusible et gaz de protection, dans lequel ledit fil est fondu par ledit faisceau laser et/ou ledit arc électrique de manière à réaliser un joint de soudure sur au moins une pièce en acier à souder, **caractérisé en ce que** ledit joint de soudure contient de 30 à 1000 ppm en poids de titane, au moins 0.7% en poids de manganèse, de 50 à 1000 ppm en poids d'oxygène et moins de 10% en poids de nickel.

2. Procédé selon la revendication 1, **caractérisé en ce que** la ou les pièces sont en acier ferritique et/ou le joint de soudure a une microstructure de type ferrite aciculaire.

3. Procédé selon l'une des revendications 1 ou 2, **caractérisé en ce que** la soudure comprend de 30 à 800 ppm de titane et/ou de 100 à 450 ppm d'oxygène, de préférence de 50 à 500 ppm de titane et/ou de 120 à 350 ppm d'oxygène.

4. Procédé selon l'une des revendications 1 à 3, **caractérisé en ce que** la soudure comprend de 0,7 à 2% de manganèse et/ou moins de 1500 ppm d'aluminium, de préférence de 0.8 à 1.7% de manganèse et/ou moins de 500 ppm d'aluminium, de préférence encore moins de 300 ppm d'aluminium.

5. Procédé selon l'une des revendications 1 à 4, **caractérisé en ce que** la soudure comprend de l'aluminium et de l'oxygène en des proportions telles que : [Al] / [O] < 2,5 où [Al] est la proportion pondérale d'aluminium et [O] est la proportion pondérale d'oxygène, de préférence [Al] / [O] < 1,5.

6. Procédé selon l'une des revendications 1 à 5, **caractérisé en ce que** la soudure comporte moins de 0,6% molybdène, moins de 80 ppm de bore, moins de 1% de silicium, moins de 0.20% de carbone, moins de 0.035 % de soufre et moins de 0.035% de phosphore, de préférence moins de 0.3% de molybdène, moins de 50 ppm de bore, de 0.1 à 0.6% de silicium et de 0,03 à 0,13% de carbone.

7. Procédé selon l'une des revendications 1 à 6, **caractérisé en ce que** la soudure comprend moins de 0.07% de niobium, moins de 0.07% de vanadium, de 1 à 200 ppm d'azote et moins de 1% de chrome, de préférence moins de 100 ppm d'azote, moins de 0.03% de niobium, moins de 0.05% de vanadium et moins de 0.3% de chrome.

8. Procédé selon l'une des revendications 1 à 6, **caractérisé en ce que** le gaz d'assistance du faisceau laser et/ou le gaz de protection de l'arc est un mélange gazeux contenant de l'oxygène jusqu'à 20 % en volume et/ou du CO₂ jusqu'à 40% en volume.

9. Procédé selon la revendication 8, **caractérisé en ce que** le gaz d'assistance du faisceau laser est un mélange gazeux contenant, en outre, au moins un gaz inerte, de préférence de l'hélium, de l'argon ou leurs mélanges.

10. Procédé selon l'une des revendications 1 à 9, **caractérisé en ce que** le fil fusible est un fil plein ou un fil fourré contenant au moins un élément choisi parmi titane, manganèse, fer, nickel et éventuellement bore, molybdène, carbone ou du chrome.

11. Procédé selon l'une des revendications 1 à 10, **caractérisé en ce que** le fil comprend de 100 à 10 000 ppm de titane, de 50 à 5000 ppm d'oxygène, jusqu'à 1500 ppm de bore, et le reste étant essentiellement constitué de fer.

12. Procédé selon la revendication 11, **caractérisé en ce que** le fil contient un ou des éléments d'alliage des aciers ferritiques choisis parmi le manganèse, le silicium, le molybdène, le nickel, et le carbone.

## Claims

1. Hybrid welding process employing a laser beam combined with an electric arc, with a supply of consumable welding wire and shielding gas, in which the said wire is melted by the said laser beam and/or the said electric arc so as to produce a weld on at least one steel workpiece to be welded, **characterized in that** the said weld contains 30 to 1000 ppm titanium by weight, at least 0.7% manganese by weight, 50 to 1000 ppm oxygen by weight and less than 10% nickel by weight.

2. Process according to Claim 1, **characterized in that** the workpiece or workpieces are made of ferritic steel and/or the weld has a microstructure of acicular ferrite type.

3. Process according to either of Claims 1 and 2, **characterized in that** the weld comprises 30 to 800 ppm titanium and/or 100 to 450 ppm oxygen, preferably 50 to 500 ppm titanium and/or 120 to 350 ppm oxygen.

4. Process according to one of Claims 1 to 3, **characterized in that** the weld comprises 0.7 to 2% manganese and/or less than 1500 ppm aluminium, preferably 0.8 to 1.7% manganese and/or less than 500 ppm aluminium, and even more preferably less than 300 ppm aluminium.

5. Process according to one of Claims 1 to 4, **characterized in that** the weld comprises aluminium and oxygen in proportions such that [Al]/[O] < 2.5, preferably [Al]/[O] < 1.5, where [Al] is the proportion of aluminium by weight and [O] is the proportion of oxygen by weight.

6. Process according to one of Claims 1 to 5, **characterized in that** the weld includes less than 0.6% molybdenum, less than 80 ppm boron, less than 1% silicon, less than 0.20% carbon, less than 0.035% sulphur and less than 0.035% phosphorus, preferably less than 0.3% molybdenum, less than 50 ppm boron, 0.1 to 0.6% silicon and 0.03 to 0.13% carbon.

7. Process according to one of Claims 1 to 6, **characterized in that** the weld comprises less than 0.07% niobium, less than 0.07% vanadium, 1 to 200 ppm nitrogen and less than 1% chromium, preferably less than 100 ppm nitrogen, less than 0.03% niobium, less than 0.05% vanadium and less than 0.3% chromium.

8. Process according to one of Claims 1 to 6, **characterized in that** the laser beam assistance gas and/or the arc shielding gas is a gas mixture containing up to 20% oxygen by volume and/or up to 40% CO₂ by volume.

9. Process according to Claim 8, **characterized in that** the laser beam assistance gas is a gas mixture furthermore containing at least one inert gas, preferably helium, argon or a mixture thereof.

10. Process according to one of Claims 1 to 9, **characterized in that** the consumable wire is a solid wire or a cored wire containing at least one element chosen from titanium, manganese, iron, nickel, and optionally boron, molybdenum, carbon or chromium.

11. Process according to one of Claims 1 to 10, **characterized in that** the wire comprises from 100 to 10 000 ppm titanium, from 50 to 5000 ppm oxygen and up to 1500 ppm boron, the balance essentially consisting of iron.

12. Process according to Claim 11, **characterized in that** the wire contains one or more alloying elements for ferritic steels, chosen from manganese, silicon, molybdenum, nickel and carbon.

## Patentansprüche

1. Hybridschweißverfahren, bei welchem ein gebündelter Laserstrahl unter Zufuhr eines schmelzbaren Schweißdrahtes und eines Schutzgases mit einem Lichtbogen kombiniert wird, wobei der Draht durch den gebündelten Laserstrahl und/oder durch den Lichtbogen derart geschmolzen wird, dass auf mindestens einem zu verschweißenden Stahlwerkstück eine Schweißnaht entsteht, **dadurch gekennzeichnet, dass** die Schweißnaht zwischen 30 und 1000 ppm nach Gewicht an Titan, mindestens 0,7 Gewichts% an Mangan, zwischen 50 und 1000 ppm nach Gewicht an Sauerstoff und mindestens 10 Gewichts% an Nickel enthält.

2. Verfahren gemäß Anspruch 1, **dadurch gekennzeichnet, dass** das oder die Werkstück(e) aus ferritischem Stahl besteht/bestehen und/oder dass die Schweißnaht eine Mikrostruktur des Typs nadelförmiger Ferrit aufweist.

3. Verfahren gemäß einem der Ansprüche 1 oder 2, **dadurch gekennzeichnet, dass** die Schweißstelle zwischen 30 und 800 ppm an Titan und/oder zwischen 100 und 450 ppm an Sauerstoff umfasst, vorzugsweise zwischen 50 und 500 ppm an Titan und/oder zwischen 120 und 350 ppm an Sauerstoff.

4. Verfahren gemäß einem der Ansprüche 1 bis 3, **dadurch gekennzeichnet, dass** die Schweißstelle zwischen 0,7 und 2 % an Mangan und/oder weniger als 1500 ppm an Aluminium umfasst, vorzugsweise zwischen 0,8 und 1,7 % an Mangan und/oder weniger als 500 ppm an Aluminium, insbesondere weniger als 300 ppm an Aluminium.

5. Verfahren gemäß einem der Ansprüche 1 bis 4, **dadurch gekennzeichnet, dass** die Schweißstelle Aluminium und Sauerstoff in den folgenden Mengenverhältnissen umfasst: [Al]/[O] < 2,5, wobei [Al] für den Gewichtsanteil an Aluminium und [O] für den Gewichtsanteil an Sauerstoff steht und [Al] / [O] vorzugsweise < 1,5 ist.

6. Verfahren gemäß einem der Ansprüche 1 bis 5, **dadurch gekennzeichnet, dass** die Schweißstelle weniger als 0,6 % an Molybdän, weniger als 80 ppm an Bor, weniger als 1 % an Silizium, weniger als 0,20 % Kohlenstoff, weniger als 0,035 % an Schwefel und weniger als 0,035 % Phosphor aufweist, vorzugsweise weniger als 0,3 % an Molybdän, weniger als 50 ppm an Bor, zwischen 0,1 und 0,6 % an Silizium und zwischen 0,03 und 0,13 % an Kohlenstoff.

7. Verfahren gemäß einem der Ansprüche 1 bis 6, **dadurch gekennzeichnet, dass** die Schweißstelle weniger als 0,07 % an Niob, weniger als 0,07 % an Vanadium, zwischen 1 und 200 ppm an Stickstoff und weniger als 1 % an Chrom umfasst, vorzugsweise weniger als 100 ppm an Stickstoff, weniger als 0,03 % an Niob, weniger als 0,05 % an Vanadium und weniger als 0,3 % an Chrom.

8. Verfahren gemäß einem der Ansprüche 1 bis 6, **dadurch gekennzeichnet, dass** es sich bei dem Hilfsgas des gebündelten Laserstrahls und/oder bei dem Schutzgas des Lichtbogens um ein gasförmiges Gemisch handelt, welches bis zu 20 Volumen% an Sauerstoff und/oder bis zu 40 Volumen% an CO₂ enthält.

9. Verfahren gemäß Anspruch 8, **dadurch gekennzeichnet, dass** es sich bei dem Hilfsgas des gebündelten Laserstrahls um ein gasförmiges Gemisch handelt, welches, unter anderem, mindestens ein Inertgas enthält, vorzugsweise Helium, Argon oder Mischungen daraus.

10. Verfahren gemäß einem der Ansprüche 1 bis 9, **dadurch gekennzeichnet, dass** es sich bei dem schmelzbaren Schweißdraht um einen Volldraht oder einen Fülldraht handelt, der mindestens ein Element enthält, das aus Titan, Mangan, Eisen, Nickel und möglicherweise Bor, Molybdän, Kohlenstoff oder Chrom gewählt wird.

11. Verfahren gemäß einem der Ansprüche 1 bis 10, **dadurch gekennzeichnet, dass** der Draht zwischen 100 und 10.000 ppm an Titan, zwischen 50 und 5.000 ppm an Sauerstoff und bis zu 1500 ppm an Bor umfasst, wobei der Rest im Wesentlichen aus Eisen besteht.

12. Verfahren gemäß Anspruch 11, **dadurch gekennzeichnet, dass** der Draht ein und mehrere Element(e) zur Legierung von ferritischen Stählen enthält, wobei diese(s) Element(e) aus Mangan, Silizium, Molybdän, Nickel und Kohlenstoff gewählt wird/werden.
